# EUROPÄISCHE PATENTSCHRIFT

(11) **EP 4 276 145 B1**
(45) Veröffentlichungstag und Bekanntmachung des Hinweises auf die Patenterteilung: **23.10.2024**
(21) Anmeldenummer: 22172276.2
(22) Anmeldetag: 09.05.2022
(51) Int. Cl.: C08L 5/00, C08J 3/24, C08J 5/02, C08J 5/12, C08J 5/18, C08L 5/04, C08L 5/12

(54) **VERFAHREN ZUM VERNETZEN VON POLYSACCHARIDEN AUS MAKROALGEN ZU EINEM POLYMERWERKSTOFF**
METHOD FOR CROSS-LINKING POLYSACCHARIDES FROM MACROALGAE TO A POLYMER MATERIAL
PROCÉDÉ DE RÉTICULATION DES POLYSACCHARIDES DES MACROALGUES EN UNE MATIÈRE POLYMÈRE

(43) Veröffentlichungstag der Anmeldung: 15.11.2023
(73) Patentinhaber: Sea6 Technologies Europe B.V., 3512 LS Utrecht (NL)
(72) Erfinder: Schmidtchen, Ludwig, 01259 Dresden (DE); Schwarz, Martin, 46147 Oberhausen (DE); Landers, Michael, 46045 Oberhausen (DE)
(74) Vertreter: Michalski Hüttermann & Partner Patentanwälte mbB

(56) Entgegenhaltungen:
- WO-A1-2019/095002
- WO-A1-2022/043691

## Beschreibung

### Technisches Gebiet

Die vorliegende Erfindung betrifft ein Verfahren zum Vernetzen von Polysacchariden aus Makroalgen zu einem Polymerwerkstoff in einem Prozessraum. Die Erfindung betrifft weiterhin ein Verfahren zum Herstellen eines Biokunststoffprodukts aus einem solchen Polymerwerkstoff in einer Vorrichtung aufweisend einen Prozessraum und eine Formgebungsvorrichtung. Außerdem offenbart ist ein durch ein solches Verfahren erhaltenes Biokunststoffprodukt.

### Hintergrund der Erfindung

Verfahren zum Vernetzen von Polysacchariden aus Makroalgen und zum Herstellen von Biokunststoffprodukten daraus sind aus dem Stand der Technik bereits bekannt. Dabei wird üblicherweise eine Lösung aus Polysaccharid aus Makroalgen enthaltendem Feststoff und eine Wasser enthaltende Flüssigkeit mit einem Verhältnis von Flüssigkeit zu Feststoff im Bereich 7:1 bis 20:1 hergestellt und in eine Form gegossen. Nach einem Vernetzen der Polysaccharide in der Lösung und einem Abtrocknen der Flüssigkeit bleibt dann ein Kunststoffprodukt zurück. Nachteilig ist für einen solchen Prozess eine vergleichsweise große Wassermenge zum Lösen der Polysaccharide sowie zum Abtrocknen des Wassers ein großer Energie- und Zeitaufwand nötig. Weiterhin ist die Geometrie des Kunststoffprodukts nur schwer zu bestimmen, da starke Schrumpfungseffekte auftreten. Zudem ist das Verfahren nachteilig zumeist nur als Batch-Verfahren durchführbar. Insgesamt ist ein solches Verfahren nicht zum wirtschaftlichen Produzieren von Biokunststoff geeignet.

Es sind ferner auch andere Verfahren zum Herstellen von Biokunststoffen bekannt, beispielsweise Extrusionsverfahren zum Umhüllen einer Flüssigkeit aus WO 2018/172781 A1 und WO 2020/065270 A1 oder ein Pressformverfahren aus US 2017/0266847 A1. Diese beziehen sich jedoch nur auf sehr enge Anwendungsgebiete.

Es ist auch bekannt, Makroalgen bzw. Polysaccharide daraus als Füllstoff für Kunststoffe beispielsweise aus Polyethylen einzusetzen, um den Einsatz von petrochemischen Ausgangstoffen zu reduzieren. Mit solchen Stoffen wird allerdings eine vollständige biologische Abbaubarkeit, die ein wesentlicher Vorteil von Biokunststoffen ist, nicht erreicht.

### Beschreibung der Erfindung

Ausgehend von dieser Situation ist es eine Aufgabe der vorliegenden Erfindung, die Herstellung von Biokunststoffen zu verbessern, wobei zumindest einer der vorgenannten Nachteile eliminiert wird.

Die Aufgabe der Erfindung wird durch die Merkmale der unabhängigen Hauptansprüche gelöst. Vorteilhafte Ausgestaltungen sind in den Unteransprüchen angegeben. Sofern technisch möglich, können die Lehren der Unteransprüche beliebig mit den Lehren der Haupt- und Unteransprüche kombiniert werden.

Nachfolgend werden Vorteile der beanspruchten Erfindungsaspekte erläutert und weiter nachfolgend bevorzugte modifizierte Ausführungsformen der Erfindungsaspekte beschrieben. Erläuterungen, insbesondere zu Vorteilen und Definitionen von Merkmalen, sind dem Grunde nach beschreibende und bevorzugte, jedoch nicht limitierende Beispiele. Sofern eine Erläuterung limitierend ist, wird dies ausdrücklich erwähnt.

Soweit Elemente mit Hilfe einer Nummerierung bezeichnet sind, also beispielsweise "erstes Bauteil", "zweites Bauteil" und "drittes Bauteil", so ist diese Nummerierung rein zur Differenzierung in der Bezeichnung vorgesehen und stellt keine Abhängigkeit der Elemente voneinander oder eine zwingende Reihenfolge der Elemente dar. Das heißt insbesondere, dass eine Vorrichtung nicht ein "erstes Bauteil" aufweisen muss, um ein "zweites Bauteil" aufweisen zu können. Auch kann die Vorrichtung ein "erstes Bauteil", sowie ein "drittes Bauteil" umfassen, ohne aber zwangsläufig ein "zweites Bauteil" aufzuweisen. Es können auch mehrere Einheiten eines Elements einer einzelnen Nummerierung vorgesehen sein, also beispielsweise mehrere "erste Bauteile".

Nach einem ersten Aspekt der Erfindung wird die Aufgabe gelöst durch ein Verfahren zum Vernetzen von Polysacchariden aus Makroalgen zu einem Polymerwerkstoff in einem Prozessraum, aufweisend die Schritte: Herstellen einer Mischung aufweisend einen Polysaccharid aus Makroalgen enthaltenden Feststoff und eine Wasser enthaltende Flüssigkeit mit einem Verhältnis der Gewichtsanteile von

Flüssigkeit zu Feststoff zwischen 3:1 und 1:9, Einstellen eines auf die Mischung wirkenden Drucks auf mindestens den Dampfdruck von Wasser bei einer ersten Temperatur, wobei die erste Temperatur größer/gleich 100° Celsius beträgt, und Temperieren der Mischung auf die erste Temperatur, wobei der Feststoff als Polysaccharid zumindest eines aus Alginat, Alginsäure, Agar und/oder Carrageenan enthält.

Es ist bevorzugt, dass die Reihenfolge von Verfahrensschritten, soweit nicht technisch in einer expliziten Reihenfolge erforderlich, variiert werden kann. Besonders bevorzugt ist jedoch die vorgenannte Reihenfolge der Verfahrensschritte.

Als ein Polymerwerkstoff wird ein Material verstand, dass aus vernetzten Makromolekülen, insbesondere aus vernetzten Polysacchariden gebildet ist. Unter einem daraus hergestelltes Kunststoffprodukt wird verstanden, dass der Polymerwerkstoff in eine bestimmte Form gebracht ist. Insbesondere werden bei einem Kunststoffprodukt anschließend an die Formgebung noch gewünschte Materialeigenschaften eingestellt, insbesondere durch abschließendes Trocknen und Abkühlen des Kunststoffprodukts. Insofern der Polymerwerkstoff oder das Kunststoffprodukt mit dem Präfix Bio- versehen sind, handelt es sich um ein aus biologisch abbaubaren Stoffen, insbesondere rein aus biologisch abbaubaren Stoffen, hergestellten Polymerwerkstoff bzw. Kunststoffprodukt. Insbesondere ist ein Biopolymerwerkstoff rein aus Polysacchariden aus Makroalgen gebildet und auch in seiner Gesamtheit vollständig biologisch abbaubar.

Ein Prozessraum ist beispielsweise eine geschlossene Kavität, in der Feststoff und Flüssigkeit zunächst eingefüllt werden und die Kavität daraufhin geschlossen wird. Es sind dann Mittel zum Temperieren und Einstellen des Drucks in der Kavität vorhanden. Bevorzugt ist der Prozessraum jedoch ein Prozessraum mit einem Eingang und einem Ausgang, in dem das Verfahren kontinuierlich durchgeführt werden kann. Der Eingang und der Ausgang sind dann beispielsweise durch eine einströmende Mischung bzw. ein ausströmenden Polymerwerkstoff gedichtet, sodass innerhalb des Prozessraumes ein Druck vorherrschen kann. In dem Prozessraum sind dabei wiederum Mittel zum Temperieren und Einstellen des Drucks vorgesehen.

Ein Polysaccharid aus Makroalgen enthaltender Feststoff ist insbesondere durch die Makroalgen selbst gebildet, die besonders bevorzugt für das Verfahren getrocknet und zerkleinert werden. Die Makroalgen weisen dabei einen bestimmten Anteil an Polysacchariden auf. Der Feststoff kann auch durch reine Polysaccharide gebildet sein, wobei die Polysaccharide zu diesem Zweck aus der Makroalge extrahiert werden, beispielsweise als Hydrokolloid. Auch die Verwendung eines Zwischenprodukts zwischen Makroalge und reinen Polysacchariden ist möglich. Bevorzugt weist der Feststoff genau ein Polysaccharid aus Alginat, Alginsäure, Agar oder Carrageenan auf oder es wird als Feststoff Alginat, Alginsäure, Agar oder Carrageenan als Reinstoff verwendet. Als Makroalgen können beispielsweise Rotalgen wie Kappaphycus Alvarezii oder Euchema Denticulatum oder Braunalgen wie Saccharina Latissima oder Laminaria Digitata verwendet werden.

Die Flüssigkeit ist bevorzugt im Wesentlichen aus Wasser gebildet und kann zudem auch weitere Stoffe, beispielsweise in geringeren Anteilen, enthalten. Insbesondere kann die Flüssigkeit auch Feststoffe enthalten, die dann bei der ersten Temperatur und dem im Prozessraum während dem Verfahren herrschenden Druck flüssig sind bzw. werden. Solche Feststoffe werden bei der Definition eines Mischungsverhältnisses zwischen Flüssigkeit und Feststoff der Flüssigkeit zugerechnet. Es liegt zudem auch im Sinne der Erfindung, wenn Bestandteile der Flüssigkeit oder des Feststoffs zu unterschiedlichen Zeitpunkten während dem Ablauf des Verfahrens hinzugefügt werden. Beispielsweise kann die Flüssigkeit während dem Temperieren kontinuierlich zugeführt werden. Das Verhältnis von Flüssigkeit zu Feststoff bezieht sich immer auf die insgesamt zugeführte Flüssigkeit und den insgesamt zugeführten Feststoff und stellt ein Verhältnis der Gewichtsanteile (Gew.-%) dar. Insbesondere kann die Mischung aus Stoffen hergestellt sein, die ihrerseits bereits einen Flüssigkeitsanteil und einen Feststoffanteil enthalten. Beispielsweise können hinzugefügte Polysaccharide einen Feuchtigkeitsanteil aufweisen, der dann in der Mischung der Flüssigkeit zugerechnet wird. Es kann auch eine Vormischung hergestellt werden, die bereits einen Anteil der Flüssigkeit und einen Anteil des Feststoffs enthält und in dem Prozessraum mit weiterer Flüssigkeit oder weiterem Feststoff gemischt wird.

Der erste Erfindungsaspekt umfasst nun die Lehre, dass die Mischung über 100° Celsius, also den Siedepunkt von Wasser bei Normdruck, hinaus erhitzt wird, wobei der Druck derart erhöht wird, dass das Wasser in der Mischung weiterhin flüssig vorliegt. Das Wasser bzw. die Flüssigkeit liegt dann also überhitzt vor. Es kann so eine besonders hohe Löslichkeit der Polysaccharide in der Flüssigkeit erreicht werden, die es erlaubt, den Flüssigkeitsanteil an der Mischung vergleichsweise gering zu wählen. Auf diese Weise kann das Verfahren mit einer geringen Flüssigkeits- bzw. Wassermenge durchgeführt werden und ist insofern besonders ressourcenschonend. Eine Temperatur kann beispielsweise mit einem Widerstandstemperaturfühler mit Pt100-Sensoren gemessen werden, wobei die vorliegenden Temperaturangaben Abweichungen im Rahmen der Messgenauigkeit solcher Pt100-Sensoren unterliegen können.

Weiterhin führt der geringe Flüssigkeitsanteil in der Mischung dazu, dass nach dem Vernetzen der Polymerwerkstoff bereits mit einer geringen Restfeuchte vorliegt, beispielsweise 10-20 %. Der Polymerwerkstoff ist dann bereits derart formstabil, dass es ohne weitere Reduzierung der Restfeuchte zu einem Biokunststoffprodukt geformt werden kann, wobei das Biokunststoffprodukt anschließend nur noch wenig oder besonders vorteilhaft gar nicht mehr getrocknet werden muss, beispielsweise auf 10 % Restfeuchte. Durch den ersten Erfindungsaspekt entfällt bzw. verringert sich somit auch ein Energie- und Zeitaufwand zum Trocknen des Polymerwerkstoffs bzw. Biokunststoffprodukts. Zudem tritt nach dem Formen des Biokunststoffprodukts durch den verringerten Trocknungsbedarf keine oder nur noch eine geringe Schrumpfung auf, sodass die letztendlich vorliegende Geometrie des Kunststoffprodukts einfach bestimmbar ist.

Die in dem Verfahren nach dem ersten Aspekt verwendeten Polysaccharide weisen eine besonders gute Lösbarkeit bei der angegebenen Temperatur größer/gleich 100° Celsius auf und resultieren in einem besonders gut zu verarbeitenden Polymerwerkstoff, aus dem ein Biokunststoff mit vorteilhaften Eigenschaften hergestellt werden kann. In einer Ausführungsform enthält der Feststoff Alginat, Alginsäure, Agar und Carrageenan, in einer alternativen Ausführungsform Alginat, Alginsäure und Agar, in einer weiteren alternativen Ausführungsform Alginat, Alginsäure und Carrageenan, in einer weiteren Ausführungsform Alginat, Agar und Carrageenan und in noch einer weiteren alternativen Ausführungsform Alginsäure, Agar und Carrageenan. In einer Ausführungsform enthält der Feststoff Alginat und Alginsäure, in einer weiteren Ausführungsform Alginat und Agar, in einer weiteren Ausführungsform Alginat und Carrageenan, in einer weiteren Ausführungsform Alginsäure und Agar, in einer weiteren Ausführungsform Alginsäure und Carrageenan und in noch einer weiteren Ausführungsform Agar und Carrageenan. In besonders bevorzugten Ausführungsformen enthält der Feststoff nur Alginat, nur Alginsäure, nur Agar oder nur Carrageenan.

Das Verfahren nach dem ersten Erfindungsaspekt kann vorteilhaft ohne weiteres als kontinuierliches Verfahren ausgeführt werden. Insbesondere ist der Polymerwerkstoff mittels verschiedener Urformverfahren beliebig formbar, sodass eine Vielzahl von Anwendungsgebieten erschließbar ist. Insgesamt ist ein Verfahren vorgeschlagen, mit dem Biopolymerwerkstoff bzw. Biokunststoffprodukte wirtschaftlich hergestellt werden können.

Es wird mit dem Verfahren zudem ein reiner Biopolymerwerkstoff hergestellt, wobei der Biopolymerwerkstoff bzw. ein Biokunststoffprodukt daraus vollständig biologisch abbaubar ist.

In einer Ausführungsform des Verfahrens enthält die Flüssigkeit ausschließlich Wasser. Es ist so ein besonders einfaches Verfahren geschaffen, wobei der Polymerwerkstoff bzw. ein daraus hergestelltes Kunststoffprodukt besonders gut biologisch abbaubar ist.

In einer alternativen Ausführungsform enthält die Flüssigkeit Wasser und zumindest einen Zusatzstoff, wobei der Zusatzstoff ein Lösungsmittel und/oder ein Weichmacher ist. Auf diese Weise können bevorzugte Materialeigenschaften des Polymerwerkstoffs bzw. eines daraus hergestellten Kunststoffprodukts erreicht werden. Mittels einem als Weichmacher wirkenden Zusatzstoff wird zudem der Trocknungsaufwand für ein aus dem Polymerwerkstoff hergestelltes Kunststoffprodukt reduziert. Durch ein Lösemittel wird die Lösbarkeit der Polysaccharide in der Flüssigkeit erhöht, sodass ein Flüssigkeitsanteil an der Mischung weiter reduziert werden kann, beispielsweise bis zu einem Verhältnis von Flüssigkeit zu Feststoff von 1:9. Die bezüglich eines geringen Flüssigkeitsgehalts in der Mischung vorgenannten Vorteile ergeben sich dann entsprechend verstärkt. In einer Ausgestaltung wird zumindest ein Zusatzstoff der Mischung hinzugefügt, während oder nachdem der Druck eingestellt und die Mischung temperiert wird.

Bevorzugt weist ein als Lösungsmittel ausgebildeter Zusatzstoff eine hohe Polarität auf. Auf diese Weise kann eine insgesamt gute Lösbarkeit der polaren Polysaccharide erreicht werden.

Weiterhin bevorzugt ist der Zusatzstoff nicht-flüchtig. Insbesondere ein als Weichmacher ausgebildeter Zusatzstoff ist nicht-flüchtig ausgebildet. Der Zusatzstoff verbleibt dann bei und nach dem Trocknen und Abkühlen eines Kunststoffprodukts in dem Kunststoffprodukt und verdunstet nicht. Dies gilt insbesondere bei erwarteten Einsatz- oder Transportbedingungen, insbesondere einer erwarteten Einsatz- oder Transporttemperatur des Kunststoffprodukts, beispielsweise bei einer Umgebungstemperatur bis zu 80° Celsius. Eine solche Temperatur kann etwa in einem Transportcontainer bei Sonneneinstrahlung vorherrschen.

Bevorzugt ist der Schmelzpunkt des Zusatzstoffs kleiner/gleich 100° Celsius. Es ist so sichergestellt, dass der Zusatzstoff unter den Prozessbedingungen des Verfahrens nach dem ersten Erfindungsaspekt flüssig vorliegt.

In einer bevorzugten Ausführungsform enthält der zumindest eine Zusatzstoff Glycerin und/oder Sorbitol. Glycerin und Sorbitol weisen jeweils eine besonders hohe Polarität auf und eignen sich insofern besonders als Lösungsmittel. Gleichzeitig sind Glycerin und Sorbitol nicht-flüchtig und verbleibt nach dem Trocknen und Abkühlen in einem Kunststoffprodukt, wo sie als Weichmacher wirken. Während Glycerin bereits ab 18,2°C flüssig vorliegt, liegt die Schmelztemperatur vor Sorbitol bei 95° Celsius. Sorbitol wird daher beispielsweise bei Umgebungstemperatur als Feststoff der Mischung hinzugefügt und im Laufe des Verfahrens bei Erreichen der Schmelztemperatur flüssig. Sorbitol kann der Mischung auch nach oder während dem Temperieren der Mischung hinzugefügt werden und dabei bevorzugt bereits flüssig, also bei einer entsprechenden Temperatur größer/gleich 95° Celsius vorliegen.

In weiteren Ausführungsformen ist zumindest ein Zusatzstoff durch Pentaerythrit, Polyol, Zuckeralkohol, Poly(oxyethylen), Poly(oxypropylen), nichtionische Tenside und/oder anionische Tenside gebildet, die jeweils insbesondere als Weichmacher in einem Kunststoffprodukt wirken. Weitere bevorzugte Zusatzstoffe, die insbesondere als Lösemittel in der Mischung wirken, sind Glykole, beispielsweise Ethylenglykol oder Diethylenglykol, Methanol, Ethanol, Maltodextrin und/oder Harnstoff.

Als Zusatzstoff in der Flüssigkeit oder als Zusatzstoff in dem Feststoff können weiterhin vorgesehen sein: 1,3-Butylenglykol, Essig- und Fettsäureester von Glycerin, Aceton, acetyliertes Distärkeadipat, acetylierte Monoglyceride, säurebehandelte Stärke, alkalisch behandelte Stärke, Ascorbinsäure, Palmitinsäureascorbylester, Ascorbylstearat, Azodicarboxamid, Bienenwachs, gebleichte Stärke, Knochenphosphat, bromiertes Pflanzenöl, Kalziumacetat, Kalziumaluminiumsilikat, Pflanzenöle Kalziumascorbat, Kalziumbenzoat, Kalziumbromat, Kalziumkarbonate, Kalziumchlorid, Kalziumcitrat, Kalziumdihydrogenphosphat, Kalziumferrocyanid, Kalziumglukonat, Kalziumhydrogensulfit, Kalziumhydroxid, Kalziumjodat, Kalziumlactat, Kalziumlactatgluconat, Kalziumlactobionat, Saccharose Kalziumperoxid, Kalziumphosphat, Kalziumpolyphosphate, Kalziumsalze von Fettsäuren, Kalziumsilicat, Kalziumsorbat, Kalziumstearat, Kalziumstearoyllactylat, Kalziumsulfat, Kalziumtartrat, Sojaprotein, Kalziumiodiat, Candelillawachs, Carnaubawachs, Johannisbrotkernmehl, Rizinusöl, , Zitronensäure, Erbsenprotein, Zitronensäure- und Fettsäureester des Glycerins, vernetzte Natriumcarboxymethylcellulose Carboxymethylcellulose, Kupfersulfat von Mono-und Diglyceriden von Fettsäuren, Diammoniumhydrogenphosphat, Dikalziumpyrophosphat, Diethylpyrocarbonat, Ethylalkohol, Ethylcellulose, Ethylhydroxyethylzellulose, , Ester von Glycerin und thermisch oxidierte Sojafettsäuren, Zein ethoxylierte Mono- und Diglyceride, Ethylhydroxyethylcellulose, Ameisensäure, Gelatine, Glycerin, Guarkernmehl, , Gummiarabikum, , Peroxidderivate, Wasserstoffperoxid, hydroxyliertes Lecithin, Hydroxypropylzellulose, Hydroxypropyldistärke, Zellulosederivate.

In einer bevorzugten Ausführungsform beträgt die erste Temperatur zwischen 100° und 180° Celsius. Besonders bevorzugt beträgt die erste Temperatur zwischen 100° und 150°C. In diesen Temperaturbereichen lässt sich ein vorteilhaftes Verhältnis zwischen einer guten Lösbarkeit der Polysaccharide in der Flüssigkeit und einem zum Aufheizen der Mischung und zum Erhöhen des Drucks auf oder über den Dampfdruck von Wasser nötigen Energieaufwand erreichen.

Ein zweiter Aspekt der Erfindung betrifft ein Verfahren zum Herstellen eines Biokunststoffprodukts in einer Vorrichtung aufweisend einen Prozessraum und eine Formgebungsvorrichtung, aufweisend die Schritte: Vernetzen von Polysacchariden aus Makroalgen zu einem Polymerwerkstoff in dem Prozessraum gemäß einem Verfahren nach dem ersten Erfindungsaspekt, Formgeben des Polymerwerkstoffs in der Formgebungsvorrichtung zu einem Biokunststoffprodukt, optional Trocknen des Biokunststoffprodukts, und Abkühlen des Biokunststoffprodukts. Dabei ist das Trocknen des Biokunststoffprodukts insofern optional, als dass es nur dann durchgeführt wird bzw. werden muss, wenn nach dem Formgeben eine entsprechende Restfeuchte in dem Biokunststoffprodukt vorliegt, wenn also die Restfeuchte höher liegt als gewünscht.

Das Verfahren nach dem zweiten Erfindungsaspekt umfasst also das Verfahren nach dem ersten Erfindungsaspekt und weist dessen Vorteile entsprechend auf. Insbesondere wird mit geringem Energie-, Wasser- und Zeitaufwand ein vollständig biologisch abbaubares Biokunststoffprodukt erzeugt, das zudem einfach in seiner Geometrie bestimmt werden kann.

Der Prozessraum kann beispielsweise durch eine einfache Kavität gebildet sein, in dem das Verfahren batchweise durchgeführt wird. In einer bevorzugten Ausführungsform ist der Prozessraum durch einen Schneckenextruder ausgebildet. Besonders bevorzugt ist der Schneckenextruder als Doppelschneckenextruder ausgebildet. Bei einem Schneckenextruder erstreckt sich eine oder erstrecken sich mehrere parallele Schnecken durch einen Kanal, die eingangsseitig die Flüssigkeit und den Feststoff bzw. die Mischung daraus einzieht bzw. einziehen und der fertige Polymerwerkstoff ausgangsseitig in oder durch eine Formgebungsvorrichtung drückt bzw. drücken. Bevorzugt erfolgt eine Durchmischung von Feststoff und Flüssigkeit in dem Schneckenextruder. Dabei können durch die Geometrie der Schnecke/n und die Betriebsparameter des Schneckenextruders die Förderleistung des Schneckenextruders sowie der auf die Mischung wirkende Druck bestimmt werden. Der Druck kann dabei bevorzugt weder eingangsseitig noch ausgangsseitig aus dem Prozessraum entweichen, da Eingang und Ausgang durch die Mischung bzw. den Polymerwerkstoff abgedichtet sind. Beispielsweise findet eingangsseitig im Prozessraum eine Abdichtung durch die Förderung von neuem Feststoff und Flüssigkeit in den Prozessraum statt. Ausgangsseitig erzeugt dann die Formgebungsvorrichtung einen Druckabfall, sodass im Prozessraum der eingestellte Druck auf die Mischung wirkt und im Austritt sich dem Umgebungsdruck angleicht.

Besonders bevorzugt ist die Formgebungsvorrichtung durch eine Extrusionsdüse gebildet. Mit einer solchen kann ein aus einem Prozessraum zur kontinuierlichen Mischung, insbesondere aus einem Schneckenextruder heraustretenden Polymerwerkstoff kontinuierlich in eine Endlosform geformt werden, beispielsweise zu einer Folie, einem Halbzeug für eine Folie oder einem Profil. Eine auf die Formgebung folgende Trocknung und ein Auskühlen können dann beispielsweise unter Umgebungsbedingungen erfolgen, wobei die Restwärme des Biokunststoffprodukts zum Trocknen des Biokunststoffprodukts genutzt werden kann.

In einer weiteren Ausführungsform ist die Formgebungsvorrichtung durch eine Spritzgussvorrichtung gebildet. Es können dann mit dem Polymerwerkstoff vergleichsweise komplexe Geometrien mittels Spritzguss hergestellt werden.

Ausserdem offenbart ist ein ein Biokunststoffprodukt, erhalten durch ein Verfahren nach dem zweiten Aspekt der Erfindung. Das Biokunststoffprodukt weist die Vorteile des ersten und zweiten Erfindungsaspekts entsprechend auf. Insbesondere ist das Biokunststoffprodukt vollständig biologisch abbaubar und kann vergleichsweise komplexe und präzise bestimmte Geometrien aufweisen.

### Kurze Beschreibung der Zeichnungen

Nachfolgend wird die Erfindung unter Bezugnahme auf die anliegenden Zeichnungen anhand bevorzugter Ausführungsbeispiele näher erläutert. Die Formulierung Figur ist in den Zeichnungen mit Fig. abgekürzt.

In den Zeichnungen zeigen
- Fig. 1: eine schematisches Verfahrensschaubild eines Verfahrens nach dem ersten Aspekt der Erfindung;
- Fig. 2: eine schematisches Verfahrensschaubild eines Verfahrens nach dem zweiten Aspekt der Erfindung; und
- Fig. 3: eine schematische Schnittansicht einer Vorrichtung zum Ausführen eines Verfahrens nach dem ersten und/oder zweiten Aspekt der Erfindung.

### Detaillierte Beschreibung der Zeichnungen

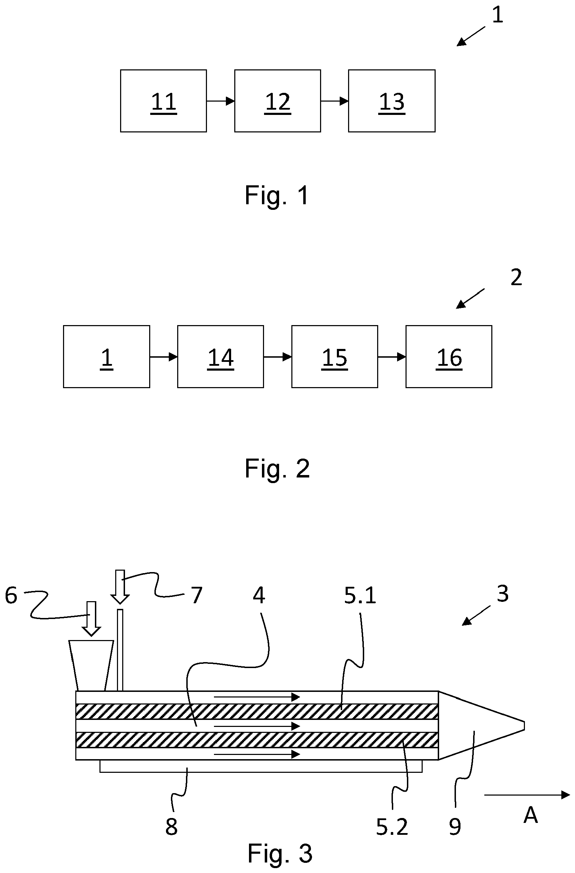

Figur 1 zeigt ein Verfahren 1 nach dem ersten Erfindungsaspekt zum Vernetzen von Polysacchariden aus Makroalgen zu einem Polymerwerkstoff in einem Prozessraum. In einem ersten Schritt 11 wird eine Mischung aus einem ein Polysaccharid aus Makroalgen enthaltenden Feststoff und eine Wasser enthaltender Flüssigkeit mit einem Verhältnis von Flüssigkeit zu Feststoff zwischen 3:1 und 1:9 hergestellt. Bevorzugt wird der Feststoff dabei aus den Makroalgen selbst, aus reinen Polysacchariden, die aus Makroalgen gewonnen wurde oder aus einem Zwischenprodukt gebildet. Der Feststoff enthält als Polysaccharide Alginat, Alginsäure, Agar und/oder Carrageenan. Bevorzugt enthält der Feststoff kein anderes als die genannten Polysaccharide und weiter bevorzugt genau eines der genannten Polysaccharide. In einem zweiten Schritt 12 wird ein auf die Mischung wirkender Druck auf mindestens den Dampfdruck von Wasser bei einer ersten Temperatur eingestellt, wobei die erste Temperatur größer/gleich 100° Celsius beträgt. In einem dritten Schritt 13 wird die Mischung auf die erste Temperatur temperiert. Der zweite Schritt 12 und der dritte Schritt 13 können nacheinander oder auch gleichzeitig ausgeführt werden.

Figur 2 zeigt ein Verfahren 2 nach dem zweiten Erfindungsaspekt zum Herstellen eines Biokunststoffprodukts in einer Vorrichtung aufweisend einen Prozessraum und eine Formgebungsvorrichtung. Das Verfahren 2 umfasst zunächst das Verfahren 1, bei dem ein Polymerwerkstoff mittels Vernetzen von Polysacchariden aus Makroalgen in dem Prozessraum hergestellt wird. Daraufhin erfolgt in einem vierten Schritt 14 eine Formgebung des Polymerwerkstoffs in der Formgebungsvorrichtung zu einem Biokunststoffprodukt. Die Formgebungsvorrichtung kann beispielsweise eine Extrusionsdüse oder eine Spritzgussvorrichtung sein. In einem optionalen fünften Schritt 15 erfolgt ein Trocknen des Biokunststoffprodukts, während in einem sechsten Schritt 16 ein Abkühlen des Biokunststoffprodukts erfolgt. Der fünfte Schritt 15 und der sechste Schritt 16 können gleichzeitig erfolgen, wobei die Restwärme, die durch das Abkühlen abgeführt wird, auch zum Trocknen des Biokunststoffprodukts genutzt wird.

Figur 3 zeigt eine Vorrichtung 3 zum Ausführen eines Verfahrens 1 nach dem ersten Erfindungsaspekt und/oder eines Verfahrens 2 nach dem zweiten Erfindungsaspekts. Die Vorrichtung 3 ist als Doppelschneckenextruder ausgebildet und weist einen Prozessraum 4 auf, in dem auf parallelen Rotationsachsen zwei Schnecken 5.1, 5.2 angeordnet sind. Die Schnecken 5.1, 5.2 sind stark vereinfacht dargestellt, weisen jedoch nicht dargestellte Windungen auf, die aufeinander abgestimmte Geometrien aufweisen, sodass die Schnecken 5.1, 5.2 bei Rotation auf ein in dem Prozessraum 4 befindliches Medium einen Druck ausüben und zudem eine Mischung des Mediums sowie eine Förderung des Mediums in einer axialen Richtung A bewirken.

In den Prozessraum 4 wird über einen Trichter Feststoff 6, enthaltend Polysaccharide aus Makroalgen, und über einen Schlauch Flüssigkeit 7, enthaltend Wasser und optional zumindest einen Zusatzstoff, eingefüllt. Der Feststoff 6 und die Flüssigkeit 7 werden in dem Prozessraum 4 mittels den Schnecken 5.1, 5.2 gemischt. Die entstehende Mischung wird entlang dem Prozessraum 4 in der axialen Richtung A gefördert, dabei weiter durchmischt und druckbeaufschlagt. Weiterhin wird die Mischung mittels Temperiermitteln 8 auf eine Temperatur größer/gleich 100° C temperiert. Ein Eintrag von Wärmeenergie erfolgt ferner auch über die mechanische Arbeit, die die Schnecken 5.1, 5.2 an der Mischung verrichten. Auf diese Weise erfolgt in der Mischung während dem Durchlaufen des Prozessraums 4 ein Vernetzen der Polysaccharide zu einem Polymerwerkstoff.

An einem in axialer Richtung A endseitigen Ausgang des Prozessraums 4 ist eine Formgebungsvorrichtung 9 angeordnet, durch die der Polymerwerkstoff hindurchgedrückt wird. Die Formgebungsvorrichtung 9 ist beispielsweise als Extrusionsdüse ausgebildet, wobei an der Extrusionsdüse eine formgebende Extrusion in eine gewünscht Geometrie erfolgt, beispielsweise in die Geometrie eines Profils, einer Folie oder eines Halbzeugs für eine Folie. Nachfolgend auf die Extrusionsdüse ist beispielsweise eine nicht näher dargestellte Abkühl- und Trockenstrecke vorgesehen, über die ein an der Extrusionsdüse geformtes Biokunststoffprodukt abkühlen und/oder trocknen kann. Die Formgebungsvorrichtung 9 kann auch als Spritzdüse zum Einspritzen des Polymerwerkstoffs in eine Spritzgussmatrize ausgebildet sein. Ein durch Spritzguss geformtes Biokunststoffprodukt wird dann beispielsweise nach dem Formen aus er Spritzgussmatrize entformt und an der Umgebungsluft abgekühlt und/oder getrocknet.

### Bezugszeichenliste

- 1: Verfahren
- 2: Verfahren
- 3: Vorrichtung
- 4: Prozessraum
- 5.1: Schnecke
- 5.2: Schnecke
- 6: Feststoff
- 7: Flüssigkeit
- 8: Temperiermittel
- 9: Formgebungsvorrichtung
- 11: erster Verfahrensschritt - Herstellen einer Mischung
- 12: zweiter Verfahrensschritt - Einstellen eines auf die Mischung wirkenden Drucks
- 13: dritter Verfahrensschritt - Temperieren der Mischung
- 14: vierter Verfahrensschritt - Formgeben des Polymerwerkstoffs
- 15: fünfter Verfahrensschritt - Trocknen des Biokunststoffprodukts
- 16: sechster Verfahrensschritt - Abkühlen des Biokunststoffprodukts
- A: axiale Richtung

## Patentansprüche

1. Verfahren (1) zum Vernetzen von Polysacchariden aus Makroalgen zu einem Polymerwerkstoff in einem Prozessraum (4), aufweisend die Schritte (11, 12, 13):
Herstellen einer Mischung (11) aufweisend einen Polysaccharid aus Makroalgen enthaltenden Feststoff (6) und eine Wasser enthaltende Flüssigkeit (7) mit einem Verhältnis der Gewichtsanteile von Flüssigkeit (7) zu Feststoff (6) zwischen 3:1 und 1:9;
Einstellen eines auf die Mischung wirkenden Drucks (12) auf mindestens den Dampfdruck von Wasser bei einer ersten Temperatur, wobei die erste Temperatur größer/gleich 100° Celsius beträgt; und
Temperieren der Mischung (13) auf die erste Temperatur;
wobei der Feststoff (6) als Polysaccharid zumindest eines aus Alginat, Alginsäure, Agar und/oder Carrageenan enthält.

2. Verfahren (1) nach Anspruch 1, wobei die Flüssigkeit (7) ausschließlich Wasser enthält.

3. Verfahren (1) nach Anspruch 1, wobei die Flüssigkeit (7) Wasser und zumindest einen Zusatzstoff enthält, wobei der Zusatzstoff ein Lösungsmittel und/oder ein Weichmacher ist.

4. Verfahren (1) nach Anspruch 3, wobei ein als Lösungsmittel ausgebildeter Zusatzstoff eine hohe Polarität aufweist.

5. Verfahren (1) nach Anspruch 3 oder 4, wobei der Zusatzstoff nicht-flüchtig ist.

6. Verfahren (1) nach einem der Ansprüche 3 bis 5, wobei der Schmelzpunkt des Zusatzstoffs kleiner/gleich 100° Celsius ist.

7. Verfahren (1) nach einem der Ansprüche 3 bis 6, wobei der zumindest eine Zusatzstoff Glycerin und/oder Sorbitol enthält.

8. Verfahren (1) nach einem der vorhergehenden Ansprüche, wobei die erste Temperatur zwischen 100° und 180° Celsius, bevorzugt zwischen 100° und 150°C beträgt.

9. Verfahren (2) zum Herstellen eines Biokunststoffprodukts in einer Vorrichtung (3) aufweisend einen Prozessraum (4) und eine Formgebungsvorrichtung (9), aufweisend die Schritte (11, 12, 13, 14, 15, 16):
Vernetzen von Polysacchariden aus Makroalgen zu einem Polymerwerkstoff in dem Prozessraum (4) (11, 12, 13) gemäß einem Verfahren (1) nach einem der vorhergehenden Ansprüche;
Formgeben des Polymerwerkstoffs (14) in der Formgebungsvorrichtung (9) zu einem Biokunststoffprodukt;
optional Trocknen des Biokunststoffprodukts (15); und
Abkühlen des Biokunststoffprodukts (16).

10. Verfahren (2) nach Anspruchs 9, wobei der Prozessraum (4) durch einen Schneckenextruder, insbesondere einen Doppelschneckenextruder, gebildet ist.

11. Verfahren (2) nach Anspruch 9 oder 10, wobei die Formgebungsvorrichtung (9) durch eine Extrusionsdüse gebildet ist.

12. Verfahren (2) nach einem der Ansprüche 9 bis 11, wobei das Verfahren (2) kontinuierlich ausgeführt wird.

13. Verfahren (2) nach einem der Ansprüche 9 bis 12, wobei das Biokunststoffprodukt als Folie, Halbzeug für eine Folie oder Profil geformt wird.

14. Verfahren (2) nach Anspruch 9 oder 10, wobei die Formgebungsvorrichtung (9) durch eine Spritzgussvorrichtung gebildet ist.

## Claims

1. Process (1) for crosslinking polysaccharides from macroalgae to give a polymer material in a processing chamber (4), comprising the steps (11, 12, 13) of:
producing a mixture (11) comprising a solid (6) containing polysaccharide from macroalgae and a water-containing liquid (7), with a ratio of liquid (7) to solid (6) by weight of between 3:1 and 1:9;
adjusting a pressure (12) acting on the mixture to at least the vapour pressure of water at a first temperature, the first temperature being greater than/equal to 100° Celsius; and
heating the mixture (13) to the first temperature;
wherein the solid (6) comprises as polysaccharide at least one of alginate, alginic acid, agar and/or Carrageenan.

2. Process (1) according to Claim 1, wherein the liquid (7) contains exclusively water.

3. Process (1) according to Claim 1, wherein the liquid (7) contains water and at least one adjuvant, the adjuvant being a solvent and/or a plasticizer.

4. Process (1) according to Claim 3, wherein an adjuvant embodied as a solvent has a high polarity.

5. Process (1) according to Claim 3 or 4, wherein the adjuvant is nonvolatile.

6. Process (1) according to any of Claims 3 to 5, wherein the melting point of the adjuvant is less than/equal to 100° Celsius.

7. Process (1) according to any of Claims 3 to 6, wherein the at least one adjuvant comprises glycerol and/or sorbitol.

8. Process (1) according to any of the preceding claims, wherein the first temperature is between 100° and 180° Celsius, preferably between 100° and 150°C.

9. Process (2) for producing a biopolymer product in an apparatus (3) having a processing chamber (4) and a shaping apparatus (9), comprising the steps (11, 12, 13, 14, 15, 16) of:
crosslinking polysaccharides from macroalgae to form a polymer material in the processing chamber (4) (11, 12, 13) by a process (1) according to any of the preceding claims;
shaping the polymer material (14) in the shaping apparatus (9) to form a biopolymer product;
optionally drying the biopolymer product (15); and
cooling the biopolymer product (16).

10. Process (2) according to Claim 9, wherein the processing chamber (4) is formed by a screw extruder, more particularly a twin-screw extruder.

11. Process (2) according to Claim 9 or 10, wherein the shaping apparatus (9) is formed by an extrusion die.

12. Process (2) according to any of Claims 9 to 11, wherein the process (2) is performed continuously.

13. Process (2) according to any of Claims 9 to 12, wherein the biopolymer product is shaped as a film, a film intermediate or a profile.

14. Process (2) according to Claim 9 or 10, wherein the shaping apparatus (9) is formed by an injection moulding apparatus.

## Revendications

1. Procédé (1) de réticulation de polysaccharides issus de macroalgues pour donner une matière polymère dans un espace de traitement (4), présentant les étapes (11, 12, 13) de :
fabrication d'un mélange (11) présentant un polysaccharide issu d'un solide (6) contenant des macroalgues et un liquide (7) contenant de l'eau avec un rapport des parties en poids de liquide (7) sur solide (6) entre 3 : 1 et 1 : 9 ;
réglage d'une pression (12) agissant sur le mélange à au moins la pression de vapeur de l'eau pour une première température, où la première température est supérieure/égale à 100 °Celsius ; et
mise en température du mélange (13) à la première température ;
dans lequel le solide (6) contient, en tant que polysaccharide, au moins une substance parmi un alginate, de l'acide alginique, de l'agar et/ou du carraghénane.

2. Procédé (1) selon la revendication 1, dans lequel le liquide (7) contient exclusivement de l'eau.

3. Procédé (1) selon la revendication 1, dans lequel le liquide (7) contient de l'eau et au moins un produit auxiliaire, où le produit auxiliaire est un solvant ou un plastifiant.

4. Procédé (1) selon la revendication 3, dans lequel un produit auxiliaire conçu sous forme de solvant présente une polarité élevée.

5. Procédé (1) selon la revendication 3 ou la revendication 4, dans lequel le produit auxiliaire n'est pas volatil.

6. Procédé (1) selon l'une des revendications 3 à 5, dans lequel le point de fusion du produit auxiliaire est inférieur/égal à 100 ° Celsius.

7. Procédé (1) selon l'une des revendications 3 à 6, dans lequel l'au moins un produit auxiliaire contient de la glycérine et/ou du sorbitol.

8. Procédé (1) selon l'une des revendications précédentes, dans lequel la première température se situe entre 100 ° et 180 ° Celsius, de préférence entre 100 ° et 150 ° C.

9. Procédé (2) de fabrication d'un produit bioplastique dans un dispositif (3) présentant un espace de traitement (4) et un dispositif de moulage (9), présentant les étapes (11, 12, 13, 14, 15, 16) de :
réticulation (11, 12, 13) de polysaccharides issus de macroalgues pour donner une matière polymère dans l'espace de traitement (4), de manière conforme au procédé (1) selon l'une des revendications précédentes ;
moulage (14) de la matière polymère dans le dispositif de moulage (9) pour donner un produit bioplastique ;
éventuellement, séchage (15) du produit bioplastique ; et
refroidissement (16) du produit bioplastique.

10. Procédé (2) selon la revendication 9, dans lequel l'espace de traitement (4) est constitué d'une extrudeuse à vis, en particulier, d'une extrudeuse double vis.

11. Procédé (2) selon la revendication 9 ou la revendication 10, dans lequel le dispositif de moulage (9) est constitué d'une buse d'extrudeuse.

12. Procédé (2) selon l'une des revendications 9 à 11, le procédé (2) étant exécuté en continu.

13. Procédé (2) selon l'une des revendications 9 à 12, dans lequel le produit bioplastique est moulé sous forme d'un film, d'un demi-produit pour un film ou un profilé.

14. Procédé (2) selon la revendication 9 ou la revendication 10, dans lequel le dispositif de moulage (9) est constitué d'un dispositif de moulage par injection.
